# EUROPEAN PATENT APPLICATION

(11) **EP 2 631 757 A1**
(43) Date of publication of application: **28.08.2013**
(21) Application number: 12156996.6
(22) Date of filing: 24.02.2012
(51) Int. Cl.: G06F 3/048

(54) **Navigation of content media displayed on a touch screen of an electronic device**

(71) Applicant: Research In Motion Limited, Waterloo, ON N2L 3W8 (CA)
(72) Inventor: Shirzadi, Farhoud, Waterloo, Ontario N2L 3W8 (CA); Allen, Luke Stephen, Waterloo, Ontario N2L 3W8 (CA); Edgar, Robbie Donald, Waterloo, Ontario N2L 3W8 (CA)
(74) Representative: Greenaway, Martin William

(57) **Abstract**

The present disclosure provides for a user of a touch screen electronic device to readily and naturally navigate displayed content media using the touch screen. A user can place and then hold a finger or thumb on the touch screen to create a temporary finger bookmark while simultaneously flipping through screens or pages of the displayed content media with other finger(s). The user can flip as many screen pages as desired in either a backwards or a forward direction and return at any time to the temporary finger bookmark by simply removing the finger that is holding the temporary bookmark.

## Description

### TECHNICAL FIELD

The present disclosure relates to a method and touch screen electronic device that provide for intuitive navigation of content media displayed on a touch screen of an electronic device.

### BACKGROUND

The current way available for a user to navigate electronic content media, such as an electronic book or magazine, on a touch screen of an electronic device involves the user dragging a finger across the screen in opposite directions to either flip backwards or forwards through content, page by page. Bookmarks may be set in a cumbersome process in which the user must take affirmative action through interaction with the menu of the user interface of the electronic device in order to set and then delete bookmarks. Such requirements are time consuming and cumbersome for the user.

Moreover, a missing feature is the ability of the user to flip through a publication or other content media and hold a page or two temporarily while quickly flipping through the remaining pages. Such a feature would make reading content media more intuitive, less cumbersome and faster.

### BRIEF DESCRIPTION OF THE DRAWINGS

Example embodiments of the present disclosure will be described below with reference to the included drawings such that like reference numerals refer to like elements and in which:

**FIG. 1** is a front view of a mobile electronic device, in accordance with various aspects of the present disclosure.

**FIG. 2** is a block diagram of an example functional representation of the electronic device of FIG. 1, in accordance with certain aspects of the present disclosure.

**FIG. 3** is a front view of an electronic device having a larger touch screen, in accordance with aspects of the present disclosure.

**FIG. 4** is a block diagram of an example functional representation of the electronic device of FIG. 3, in accordance with certain aspects of the present disclosure.

**FIG. 5** illustrates touch screen navigation of displayed content media, in accordance with various aspects of the present disclosure.

**FIGs. 6** and **7** illustrate flows in accordance with various aspects of the present disclosure.

### DETAILED DESCRIPTION

The various examples presented herein allow a user to readily and naturally navigate displayed content media using a touch screen of an electronic device. A user can place and then hold a single finger or thumb on the touch screen to create a temporary finger bookmark while simultaneously flipping through screens or pages of the displayed content media with other finger(s). Any number of temporary finger bookmarks may be created in this manner. The user can flip as many screen pages as desired in either a backwards or a forward direction and return at any time to the temporary finger bookmark by simply removing the finger that is holding the temporary bookmark.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

Therefore, in accordance with certain aspects of the present disclosure, there is provided a method for navigation of content media displayed on a touch screen of an electronic device. The method including: in response to a first finger touch down event on a first screen of a plurality of screens of the content media displayed and navigable on the touch screen of the electronic device, creating a first temporary finger bookmark on the first screen of the displayed content media; and in response to a first finger touch release event on the first screen of the content media, flipping to the first screen of the content media displayed on the touch screen and deleting the first temporary finger bookmark on the first screen of the content media.

In accordance with another aspect of the present disclosure, there is provided an electronic device, having: a touch-sensitive touch screen; a processor coupled to the touch screen; a memory coupled to and in cooperative arrangement with the processor, the processor and the memory configured to: in response to a first finger touch down event on a first screen of a plurality of screens of the content media displayed and navigable on the touch screen of the electronic device, create a first temporary finger bookmark on the first screen of the displayed content media; and in response to a first finger touch release event on the first screen of the content media, flip to the first screen of the content media displayed on the touch screen and delete the first temporary finger bookmark on the first screen of the content media.

In accordance with still further aspects of the present disclosure, there is provided a non-transitory computer-readable medium having computer-executable instructions for navigating content media displayed on a touch screen of an electronic device: in response to a first finger touch down event on a first screen of a plurality of screens of the content media displayed and navigable on the touch screen of the electronic device, creating a first temporary finger bookmark on the first screen of the displayed content media; and in response to a first finger touch release event on the first screen of the content media, flipping to the first screen of the content media displayed on the touch screen and deleting the first temporary finger bookmark on the first screen of the content media.

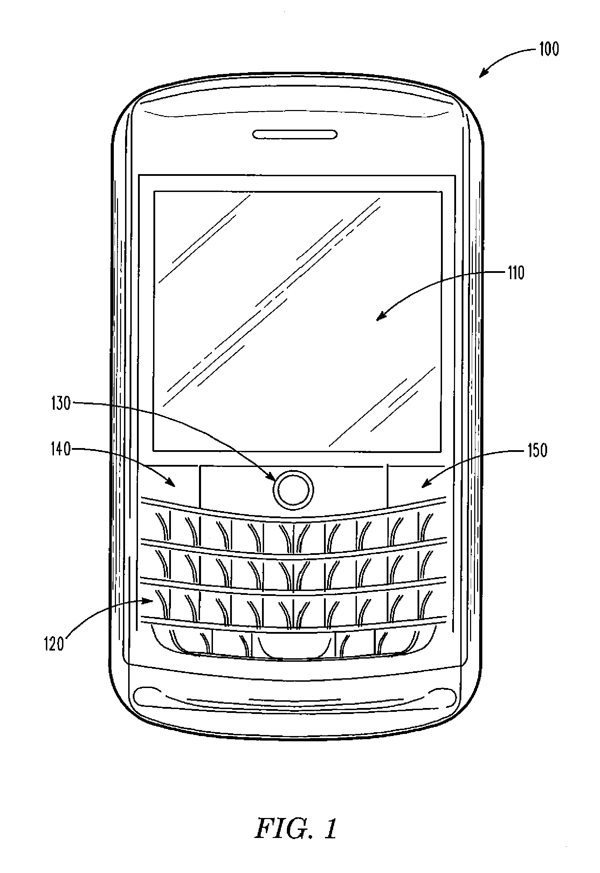

**FIG. 1** is an illustration of an example electronic device 100 in accordance with aspects of the present disclosure. Electronic device 100 may be a mobile or portable device with a touch-sensitive touch screen. Examples of such electronic devices include mobile phones, cellular phones, smart phones, personal digital assistants (PDAs), digital cameras, wireless organizers, wirelessly enabled notebook computers, tablet computing devices, handheld electronic gaming devices, digital photograph albums, and the like. Electronic device 100 has a touch screen 110 for displaying information, and may also have a keyboard 120 for entering information such as composing email messages, and a pointing device 130 such as a trackball, track wheel, touchpad, and the like, for navigating through items on screen 110. Navigation keys 140 and 150 may be used for navigating content. In some examples, display 110 is a touch screen and the plurality of navigation keys 140, 150 and/or keyboard 110 are soft keys or icons displayed on display 110 and actuated by a human finger or a stylus.

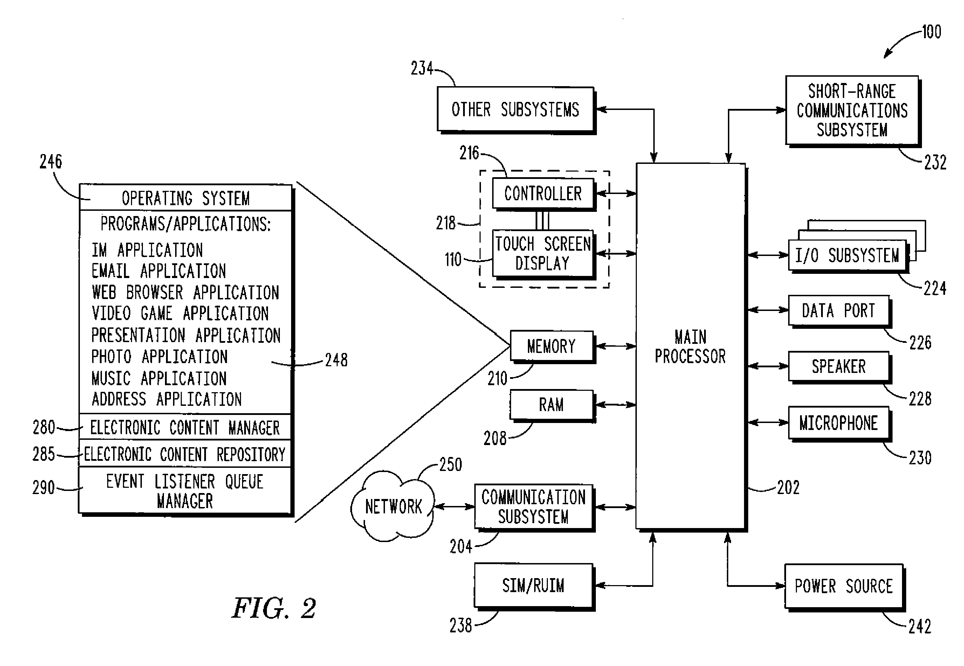

**FIG. 2** is a block diagram of an example functional representation of the electronic device 100 of FIG. 1, in accordance with certain aspects of the present disclosure. Electronic device 100 includes multiple components, such as a processor 202 that controls the overall operation of electronic device 100. Communication functions, including data and voice communications, are performed through a communication subsystem 204. Communication subsystem 204 receives data from and sends data to a network 250, such as a wide area network, using long-range communication. An example of the data sent or received by the communication subsystem includes but is not limited to email messages, short messaging service (SMS) messages, instant messages, web content, and other electronic content. The wireless network 250 is, for example, a cellular network. In some examples, network 250 is a WIMAX network, a wireless local area network (WLAN) connected to the Internet, or any other suitable communications network. In other examples, other wireless networks are contemplated, including, but not limited to, data wireless networks, voice wireless networks, and networks that support both voice and data communications.

A power source 242, such as one or more rechargeable batteries, a port to an external power supply, a fuel cell, or a solar cell, powers electronic device 100.

The processor 202 interacts with other functional components, such as Random Access Memory (RAM) 208, memory 210, a touch screen 110 (such as, for example, an LCD) which is operatively connected to an electronic controller 216 so that together they form a display subsystem 218, an input/output (I/O) subsystem 224, a data port 226, a speaker 228, a microphone 230, short-range communications subsystem 232, and other subsystems 234. It will be appreciated that the electronic controller 216 of the display subsystem 218 need not be physically integrated with the touch screen 110.

The auxiliary I/O subsystems 224 could include input devices other than the touch screen if desired, such as one or more control keys, a keyboard or keypad, navigational tool (input device), or both. The navigational tool could be a clickable/depressible trackball or scroll wheel, or touchpad. User-interaction with a graphical user interface is performed through the I/O subsystem 224.

Electronic device 100 also includes one or more clocks including a system clock (not shown) and sleep clock (not shown). In other examples, a single clock operates as both system clock and sleep clock. The sleep clock is a lower power, lower frequency clock.

To identify a subscriber for network access, electronic device 100 uses a Subscriber Identity Module or a Removable User Identity Module (SIM/RUIM) card 238 for communication with a network, such as the wireless network 250. Alternatively, user identification information is programmed into memory 210.

Electronic device 100 includes an operating system 246 and software programs, subroutines or components 248 that are executed by the processor 202 and are typically stored in a persistent, updatable store such as the memory 210. In some examples, software programs or applications 248 include, for example, personal information management application; communications applications such as Instant Messaging (IM), presentation and email applications; messaging applications; video game applications; web browser applications; photo applications; address applications; music applications; and the like. As will be described further below, such applications may be represented by a representative icon or image. Additional applications or programs can be loaded onto electronic device 100 through data port 226, for example. In some examples, programs are loaded over the wireless network 250, the auxiliary I/O subsystem 224, the short-range communications subsystem 232, or any other suitable subsystem 234.

An electronic content manager 280 is included in memory 210 of device 100. Electronic content manager 280 enables device 100 to fetch, download, send, receive, and display electronic content as will be described in detail below,

An electronic content repository 285 is also included in memory 210 of device 100. The electronic content repository or database, 285 stores electronic content such as electronic books, videos, music, multimedia, photos, and the like.

Also executed by processor 202 is event listener queue manager 290. As will be further described, event listener queue manager 290 can recognize three types of user driven events: a touch and touch event, a finger touch release event and a touch swipe event. A touch and touch event is also referred to as a finger touch down event in which the user creates one or more temporary finger bookmarks by placing and holding a finger or thumb at a desired temporary bookmark location in a content media being displayed on a touch screen of an electronic device. A finger touch release event is an event in which the user moves the finger or thumb holding a bookmark and thus releases that temporary bookmark. A touch swipe event is an event in which the user navigates one or more screens/pages of the displayed content media by flipping through the screens of displayed content media with the fingers or thumbs in a forwards or backwards swiping motion on the touch screen of the electronic device. In response to recognition of one or more of these events, the event listener queue manager 290 of memory 210 in cooperation with processor 202 provides for navigation, creation of temporary finger bookmarks, deletion of temporary finger bookmarks previously created by a touch and hold action by the user, and/or automatic navigation to the screen associated with a released temporary finger bookmark.

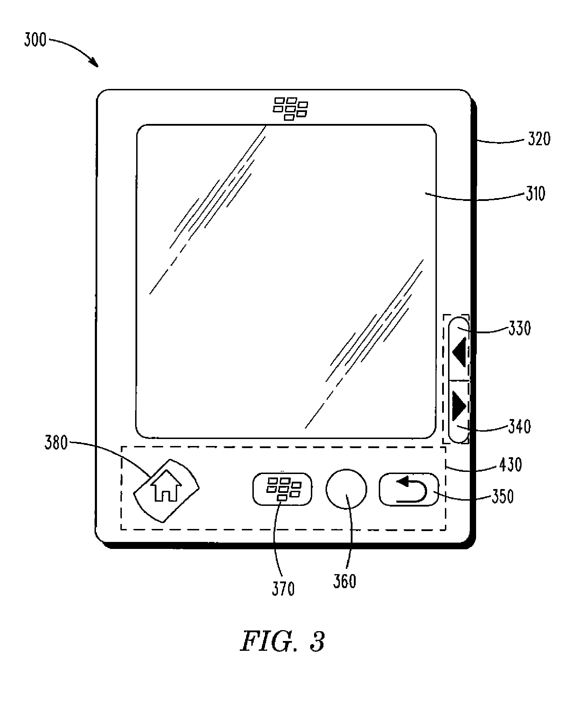

Referring now to **FIG. 3****,** an illustration of an electronic device 300 having a larger touch screen 310 is presented, in accordance with an example of the present disclosure. The electronic device 300 has a housing 320 which holds a large touch screen display 310 suitable for viewing visual electronic content such as electronic books, photos, videos, and the like. The mobile device 300 includes an input subsystem 430 (indicated within dashed lines in FIG. 3) that in addition to the touch screen display may include keys 330, 340, 350, 360, 370, and 380, located in the housing 320 of the device. For example, menu key 370 is used to cause the electronic device 300 to render on display 310 a graphical user interface (GUI), action key 360 is used to initiate an action by activating an element from the GUI, and escape key 350 is used to cancel the last action performed or return to a previous screen on the GUI. Of course, these keys may be soft keys or icons displayed on touch screen 310 and actuated by a human finger or stylus.

Navigation keys 330 and 340 are used, for example, to navigate forwards and backwards within content viewed on touch screen display 310, respectively. As an example, keys 330 and 340 are used to flip pages when viewing an electronic book, to navigate to a different scene in video content, or to select a different audio track to play. The home key 380 causes the mobile electronic device 300 to render on touch screen display 310 a default home screen (not shown). Electronic device 300 also has a speaker (not shown) for playing back audio content, the audio component of video content, or audio produced by text-to-speech of text content, multimedia, and the like.

In various aspects of the disclosure, touch screen 310 serves as a display and an interface between a user and the device 300. Touch screen 310 and the plurality of keys 330, 340, 350, 360, 370, and 380 may be soft keys or icons displayed on touch screen display 310 and actuated by a human finger or a stylus.

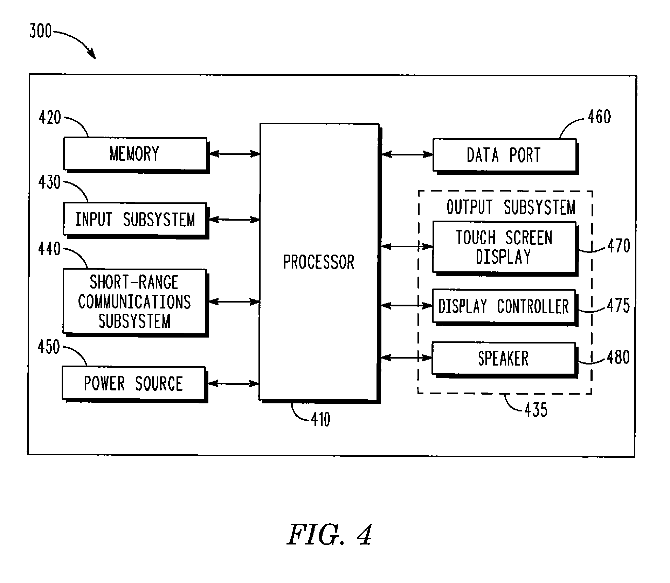

**FIG. 4** provides an example functional representation of electronic device 300. Additionally, FIG. 4 may provide an alternate example of a block diagram representation of the electronic device 300 of FIG. 3. As shown in FIG. 4, electronic device 300 has a processor 410 that controls the overall operation of the electronic device 300. Short-range communications subsystem 440, such as a BLUETOOTH^{®} subsystem, is coupled to processor 410 and provides short-range communications capability used for sending and receiving electronic content at mobile electronic device 300. A data port 460, such as a Universal Serial Bus (USB) port, is used for sending and receiving electronic content at mobile electronic device 300.

Memory 420 may be a Flash memory chip and contains an operating system and other software modules subroutines utilized by processor 410 to operate electronic device 300. Memory 420 also contains modules for carrying out the methods of the present disclosure, as will be described below. Software programs or applications that may reside in memory 420 may include personal information management applications; communications applications such as Instant Messaging (IM), presentation and email applications; messaging applications; video game applications; web browser applications; photo applications; address applications; music applications; and the like. As will be described further below, such applications may be represented by a representative icon or image. Additional applications or programs can be loaded onto electronic device 300 through data port 460, for example.

Electronic device 300 also includes an input subsystem 430 for controlling the device, navigating through content, selecting content to playback, and the like. Input subsystem 430 may also include, for example, keys 330, 340, 350, 360, 370, and 380, described above. Input subsystem 430 may include a touchpad, a trackball, a roller wheel, a touch screen with or without a stylus, or any other suitable input device.

A power source 450, such as a battery, is used to supply power to the processor 410, memory 420, and other subsystems on electronic device 300. In some examples, power source 450 is a power supply connector, a fuel cell, a solar cell, or any other suitable power source.

Touch screen 470 of output subsystem 435 may be, for example, a liquid crystal display (LCD) coupled to processor 410 and displays electronic content as described above. Touch screen display 470 may be a light emitting diode (LED) display, a plasma display, an electronic ink display (e-ink), a Thin Film Transistor (TFT) LCD, or any other suitable display type. Operation of touch screen display 470 is controlled by display controller 475. Touch screen display 470 corresponds to touch screen 310 of FIG. 3 and is controlled by display controller 475 as shown.

Electronic device 300 also has speaker 480 for playing back audio content, the audio component of video content, or audio produced by text-to-speech of text content, and the like.

In some examples of the disclosure, short-range communications subsystem 440 is a wireless local area network (WLAN) subsystem, an Infra Red Data Association (IrDA) subsystem, or a ZIGBEE^{®} subsystem. Other short-range communications subsystems would also be apparent to those of skill in the art.

Data port 460 is a serial port according to the RS-232 specifications, an IEEE 1394 FireWire port, an optical connection, a local area network (LAN) connection such as Ethernet, or any other suitable data communications port.

Memory 420 may be a Random Access Memory (RAM), a serial electrically erasable programmable read-only memory (SEEPROM), a removable secure digital (SD) card, a removable compact flash card, a USB flash drive, or any other suitable memory module as would be apparent to those of skill in the art.

In accordance with the examples described herein, a user is provided with an improved way of navigating multiple-page, i.e. multi-page content media, whether it be browsing a book, flipping through calendar views, browsing web pages or screens, looking at pictures in a picture album, or navigating other content media. As used herein, screens of displayed content refer to pages, screen shots, pictures of a picture album, etc. Use of a user's own fingers, which include individual digits or fingers as well as thumbs, allows the user to quickly, readily and naturally flip through screens of content media, much in the way that a user can navigate the pages of a real book. This navigation is accomplished without the need for other interaction by the user with the user interface of the electronic device. In this manner, previously required interfaces, such as bookmark buttons of the electronic device, are not required.

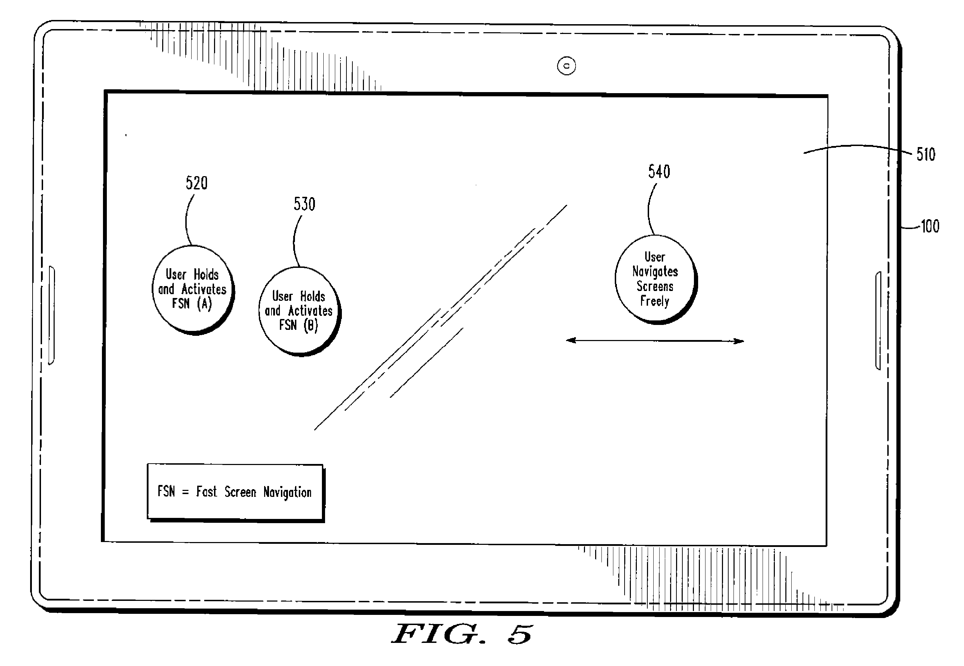

Referring now to **FIG. 5****,** a touch screen display 510 of a touch screen electronic device, such as electronic device 300, is illustrated. A user can browse through content media, such as an electronic book, magazine, electronic photo album, web pages, or the like, by making touch swipe events, such as flipping motions with the finger(s), to navigate. The user may additionally create one or more temporary finger bookmarks on different pages or screens of the displayed content media by placing one or more fingers or thumbs on various screens of the displayed content media. Thus, the user may create a first temporary finger bookmark by placing a finger or thumb on a first screen of the content media; such a first finger touch down event is illustrated by the user touch hold 520. The user can navigate other screens of the content media freely by use of a touch swipe motion 540 (touch swipe event or events) and maintain the first temporary finger bookmark 520 so long as the finger used in the first temporary finger bookmark is not moved. The user can quickly and naturally navigate small or large portions of the content media by selective use of the touch swipe motion 540. In navigating the pages of an electronic book, for example, in which the pages or screens of the books are feathered out on the touch screen, the user can flip through large chunks of the book by a touch swipe motion that encompasses a large number of pages (screen) of the book.

Any number of temporary finger bookmarks may be employed by the user and could theoretically by up to ten temporary bookmarks, one for each of a user's thumbs and fingers. In the drawing, a second temporary finger bookmark 530 is formed by a user holding a second finger or thumb on a second screen of the displayed content media. The user can freely navigate other screens of the displayed content media by employing a touch swipe event 540, moving forwards and backwards through the available screens of the content media at will. A user in this illustration has two temporary finger bookmarks 520 and 530 and these temporary bookmarks function as bookmarks until the user removes the finger or thumb holding the bookmark in a finger touch release event.

Removal of a temporary finger bookmark causes the pages or screens of the displayed content media to flip automatically back to the screen of that bookmark. So, in the example shown, a user removing his finger from bookmark 520 on screen A of the media content in a finger touch release event automatically causes the content media to return to screen A. Similarly, the user removing his finger from bookmark 530 on screen B of the media content in another finger touch release event automatically causes the content media to return to screen B.

In this manner, a user can flip as many pages as desired in either a backward or forward direction and by removing the temporary bookmark associated with a certain screen location in the displayed content media, the required number of screen pages of the content media are flipped to automatically return to that screen location upon the occurrence of the finger touch release event. The user may wish to place and hold a second, third, fourth or fifth finger or thumb, for example, to have as many temporary bookmarks or page holders as desired and removal of any of these temporary finger bookmarks will cause the content media to automatically return or flip back to the screen location of the released temporary bookmark. This use of temporary bookmarks is a very fast, natural, intuitive way of flipping through publications without having to click bookmark buttons or save or delete a created bookmark. As previously discussed, the use of temporary bookmarks can be used to jump, flip, page, and otherwise navigate calendar views, picture albums, web pages, or any other media content displayed on a touch screen of an electronic device.

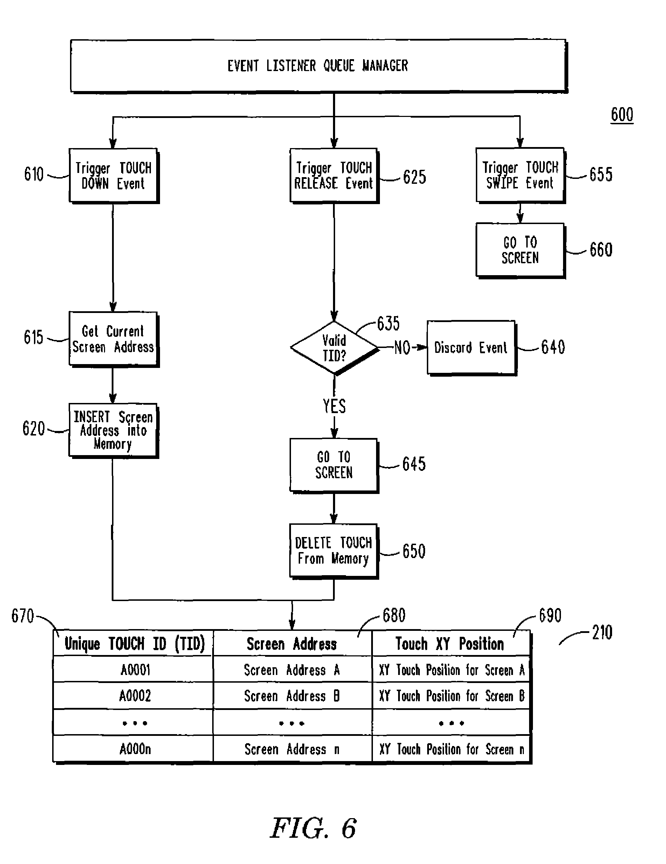

Referring now to **FIG. 6****,** flowchart 600 illustrates the methodology employed by event listener queue manager 290 of FIG. 2. There are three different user events that are recognized and acted upon by event listener queue manager 290: a finger touch down event (a touch hold by a finger or thumb user to create a temporary finger bookmark), a touch release event (the user releasing or removing his finger or thumb of a temporary finger bookmark), and a touch swipe event (the user navigating the screens or pages of the content media with fingers or thumbs not employed in a touch hold position of a temporary finger bookmark). At Block 610, the event listener queue manager recognizes the occurrence of a user touch down event on a screen or page of the displayed content media. At Block 615, the current screen address of the touch down event is obtained and inserted into the device memory 210 at Block 620.

Event listener queue manager 290 can also recognize a touch release event that occurs when the user moves the thumb or finger associated with a temporary finger bookmark, at Block 625. At Decision Block 635, the inquiry is whether a touch identification (TID) associated with that released temporary finger bookmark is valid. If no, the event is discarded at block 640 and the temporary finger bookmark maintained. If yes, then at Block 645 the screens of the displayed content media are automatically flipped back to the screen associated with the released temporary finger bookmark. Next, at Block 650 the temporary finger bookmark associated with the touch release event is deleted from memory 210.

The third event recognized by the event listener queue manager 290 is a normal navigation motion, the touch swipe event, associating with a user of the electronic device swiping their finger(s) in a forward or backward motion to navigate forwards or backwards through the screens of the displayed content media. As previously discussed, many or few screens may be flipped and are in response to the touch swipe motion made by the user. Moreover, the user may navigate through the displayed content media freely, whether or not there are one or more temporary finger bookmarks employed by the user. Thus, at Block 655 the event listener queue manager 290 recognizes a touch swipe event by the user and navigates to the indicated screen at Block 660. It can be seen that device memory 210 can store a unique touch identification (TID) 670, screen address 680, and touch XY position 690 within memory 210 for every temporary finger bookmark created.

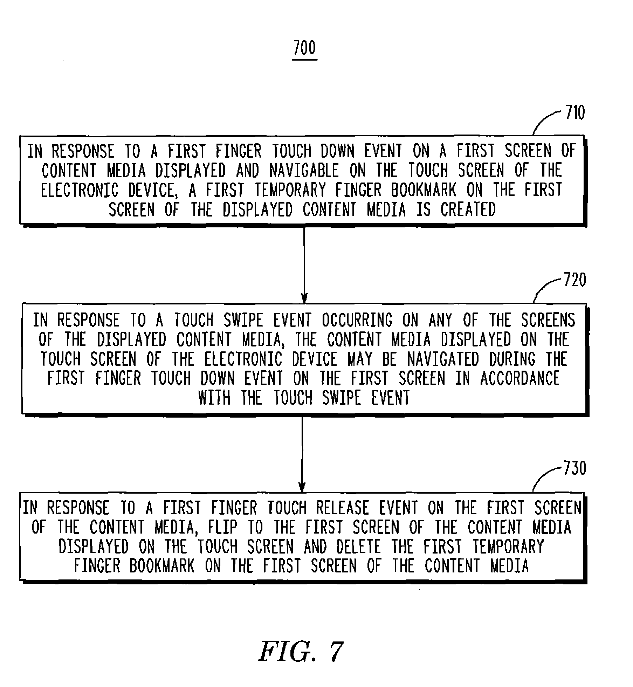

Flowchart 700 of **FIG. 7** illustrates a methodology for navigation of content media displayed on a touch screen of an electronic device, in accordance with the above discussion. At Block 710, in response to a first finger touch down event on a first screen of content media displayed and navigable on the touch screen of the electronic device, a first temporary finger bookmark on the first screen of the displayed content media is created. Temporary finger bookmark creation is illustrated by reference numbers 520 of FIG. 5 and 610, 615, and 620 of FIG. 6, for example. At Block 720, in response to a touch swipe event occurring on any of the screens of the displayed content media, the content media displayed on the touch screen of the electronic device may be navigated during the first finger touch down event on the first screen in accordance with the touch swipe event. Navigation in response to a touch swipe event is illustrated by reference number 540 of FIG. 5 and 655 and 660 of FIG. 6, for example. The navigation afforded by Block 720 may occur in any order within flow 700. As previously discussed, such touch swipe action by a user may occur with or without the existence of temporary finger bookmark(s). Thus, Block 720 may occur before or after blocks 710 and 730, for example.

At Block 730, in response to a finger touch release event on a screen of the content media, the content media will flip to the screen of the content media associated with the removed finger or thumb, and the temporary finger bookmark will be deleted from memory. Please reference numbers 625-650 of FIG. 6, for example.

The order in which the operations represented in Blocks 710, 720, and 730 occur is not predetermined or predefined, and these operations may occur in any order or not at all. Thus, while the blocks of the methods are shown as occurring in a particular order, it will be appreciated by those skilled in the art that many of the blocks are interchangeable and can occur in different orders than shown without materially affecting the end results of the methods.

The implementations of the present disclosure described above are intended to be examples only. Those of skill in the art can effect alterations, modifications and variations to the particular example embodiments herein without departing from the intended scope of the present disclosure. Moreover, selected features from one or more of the above-described example embodiments can be combined to create alternative example embodiments not explicitly described herein.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method for navigation of content media displayed on a touch screen of an electronic device, comprising:
in response to a first finger touch down event on a first screen of a plurality of screens of the content media displayed and navigable on the touch screen of the electronic device, creating a first temporary finger bookmark on the first screen of the displayed content media; and
in response to a first finger touch release event on the first screen of the content media, flipping to the first screen of the content media displayed on the touch screen and deleting the first temporary finger bookmark on the first screen of the content media.

2. The method of claim 1, further comprising:
in response to a touch swipe event occurring on any of the plurality of screens of the displayed content media, navigating the plurality of screens of the content media displayed on the touch screen of the electronic device during the first finger touch down event on the first screen in accordance with the touch swipe event.

3. The method of claim 1, the creating the first temporary finger bookmark on the first screen of the displayed content media in response to the first finger touch down event on the first screen further comprising:
storing a first screen address of the first screen of the displayed content media into a memory of the electronic device; and
optionally,
in response to the first finger touch release event on the first screen of the content media, further comprising: deleting the first screen address of the first screen from the memory of the electronic device.

4. The method of claim 1, further comprising:
in response to a second finger touch down event on a second screen of the plurality of screens of the content media displayed and navigable on the touch screen of the electronic device, creating a second temporary finger bookmark on the second screen of the displayed content media; and
in response to a second finger touch release event on the second screen of the content media, flipping to the second screen of the content media displayed on the touch screen and deleting the second temporary finger bookmark on the second screen of the content media.

5. The method of claim 4, further comprising:
in response to a touch swipe event occurring on any of the plurality of screens of the displayed content media, navigating the plurality of screens of the content media displayed on the touch screen of the electronic device during the first and second finger touch down events on the first and second screens in accordance with the touch swipe event.

6. The method of claim 4, the creating the second temporary finger bookmark on the first screen of the displayed content media in response to the second finger touch down event on the second screen further comprising:
storing a second screen address of the second screen of the displayed content media into a memory of the electronic device; and
optionally,
in response to the second finger touch release event on the second screen of the content media, further comprising: deleting the second screen address of the second screen from the memory of the electronic device.

7. A non-transitory computer-readable medium having computer-executable instructions for navigating content media displayed on a touch screen of an electronic device, comprising:
in response to a first finger touch down event on a first screen of a plurality of screens of the content media displayed and navigable on the touch screen of the electronic device, creating a first temporary finger bookmark on the first screen of the displayed content media; and
in response to a first finger touch release event on the first screen of the content media, flipping to the first screen of the content media displayed on the touch screen and deleting the first temporary finger bookmark on the first screen of the content media.

8. The non-transitory computer-readable medium of claim 7, further comprising:
in response to a touch swipe event occurring on any of the plurality of screens of the displayed content media, navigating the plurality of screens of the content media displayed on the touch screen of the electronic device during the first finger touch down event on the first screen in accordance with the touch swipe event.

9. The non-transitory computer-readable medium of claim 7, further comprising:
in response to a second finger touch down event on a second screen of the plurality of screens of the content media displayed and navigable on the touch screen of the electronic device, creating a second temporary finger bookmark on the second screen of the displayed content media; and
in response to a second finger touch release event on the second screen of the content media, flipping to the second screen of the content media displayed on the touch screen and deleting the second temporary finger bookmark on the second screen of the content media; and
optionally,
further comprising: in response to a touch swipe event occurring on any of the plurality of screens of the displayed content media, navigating the plurality of screens of the content media displayed on the touch screen of the electronic device during the first and second finger touch down events on the first and second screens in accordance with the touch swipe event.

10. An electronic device, comprising:
a touch-sensitive touch screen;
a processor coupled to the touch screen;
a memory coupled to and in cooperative arrangement with the processor, the processor and the memory configured to:
in response to a first finger touch down event on a first screen of a plurality of screens of the content media displayed and navigable on the touch screen of the electronic device, create a first temporary finger bookmark on the first screen of the displayed content media; and
in response to a first finger touch release event on the first screen of the content media, flip to the first screen of the content media displayed on the touch screen and delete the first temporary finger bookmark on the first screen of the content media.

11. The device of claim 10, the processor and memory further configured to:
in response to a touch swipe event occurring on any of the plurality of screens of the displayed content media, navigate the plurality of screens of the content media displayed on the touch screen of the electronic device during the first finger touch down event on the first screen in accordance with the touch swipe event.

12. The device of claim 10, the processor and memory further configured to:
store a first screen address of the first screen of the displayed content media into a memory of the electronic device; and
optionally,
in response to the first finger touch release event on the first screen of the content media, the processor and memory further configured to: delete the first screen address of the first screen from the memory of the electronic device.

13. The device of claim 10, the processor and memory further configured to:
in response to a second finger touch down event on a second screen of the plurality of screens of the content media displayed and navigable on the touch screen of the electronic device, create a second temporary finger bookmark on the second screen of the displayed content media; and
in response to a second finger touch release event on the second screen of the content media, flip to the second screen of the content media displayed on the touch screen and delete the second temporary finger bookmark on the second screen of the content media.

14. The device of claim 13 the processor and memory further configured to:
in response to a touch swipe event occurring on any of the plurality of screens of the displayed content media, navigate the plurality of screens of the content media displayed on the touch screen of the electronic device during the first and second finger touch down events on the first and second screens in accordance with the touch swipe event.

15. The device of claim 13 the processor and memory further configured to:
store a second screen address of the second screen of the displayed content media into a memory of the electronic device.; and
optionally,
the processor and memory further configured to: in response to the second finger touch release event on the second screen of the content media, delete the second screen address of the second screen from the memory of the electronic device.

## Amended claims

### Amended claims in accordance with Rule 137(2) EPC.

**1.** A method for navigation of content media displayed on a touch screen (510) of an electronic device (300), comprising:
displaying a first screen of a plurality of screens;
in response to a first finger touch down event on the first screen of the plurality of screens of the content media displayed and navigable on the touch screen (510) of the electronic device (300), creating a first temporary finger bookmark (520) corresponding to the first screen of the displayed content media;
displaying a second screen of a plurality of screens; and
in response to a first finger touch release event corresponding to the first screen of the content media, flipping to and displaying the first screen of the content media on the touch screen (510) and deleting the first temporary finger bookmark (520).

**2.** The method of claim 1, further comprising:
in response to a touch swipe event (540) occurring on any of the plurality of screens of the displayed content media, navigating the plurality of screens of the content media displayed on the touch screen (510) of the electronic device (300) during the first finger touch down event on the first screen in accordance with the touch swipe event (540).

**3.** The method of claim 1, the creating the first temporary finger bookmark (520) corresponding to the first screen of the displayed content media in response to the first finger touch down event on the first screen further comprising:
storing a first screen address of the first screen of the displayed content media into a memory of the electronic device (300); and
optionally,
in response to the first finger touch release event, further comprising:
deleting the first screen address of the first screen from the memory of the electronic device (300).

**4.** The method of claim 1, further comprising:
in response to a second finger touch down event on a second screen of the plurality of screens of the content media displayed and navigable on the touch screen (510) of the electronic device (300), creating a second temporary finger bookmark (530) corresponding to the second screen of the displayed content media; and
in response to a second finger touch release event corresponding to the second screen of the content media, flipping to and displaying the second screen of the content media displayed on the touch screen (510) and deleting the second temporary finger bookmark (530).

**5.** The method of claim 4, further comprising:
in response to a touch swipe event (540) occurring on any of the plurality of screens of the displayed content media, navigating the plurality of screens of the content media displayed on the touch screen (510) of the electronic device (300) during the first and second finger touch down events in accordance with the touch swipe event (540).

**6.** The method of claim 4, the creating the second temporary finger bookmark (530)corresponding to the second screen of the displayed content media in response to the second finger touch down event on the second screen further comprising:
storing a second screen address of the second screen of the displayed content media into a memory of the electronic device (300); and
optionally,
in response to the second finger touch release event, further comprising:
deleting the second screen address of the second screen from the memory of the electronic device (300).

**7.** A non-transitory computer-readable medium having computer-executable instructions for navigating content media displayed on a touch screen (510) of an electronic device (300), comprising:
displaying a first screen of a plurality of screens;
in response to a first finger touch down event on the first screen of the plurality of screens of the content media displayed and navigable on the touch screen (510) of the electronic device (300), creating a first temporary finger bookmark (520) corresponding to the first screen of the displayed content media;
displaying a second screen of a plurality of screens; and
in response to a first finger touch release event corresponding to the first screen of the content media, flipping to and displaying the first screen of the content media on the touch screen (510) and deleting the first temporary finger bookmark (520).

**8.** The non-transitory computer-readable medium of claim 7, further comprising:
in response to a touch swipe event occurring on any of the plurality of screens of the displayed content media, navigating the plurality of screens of the content media displayed on the touch screen (510) of the electronic device (300) during the first finger touch down event on the first screen in accordance with the touch swipe event (540).

**9.** The non-transitory computer-readable medium of claim 7, further comprising:
in response to a second finger touch down event on a second screen of the plurality of screens of the content media displayed and navigable on the touch screen (510) of the electronic device (300), creating a second temporary finger bookmark (530) corresponding to the second screen of the displayed content media; and
in response to a second finger touch release event corresponding to the second screen of the content media, flipping to and displaying the second screen of the content media displayed on the touch screen (510) and deleting the second temporary finger bookmark (530); and
optionally,
further comprising: in response to a touch swipe event (540) occurring on any of the plurality of screens of the displayed content media, navigating the plurality of screens of the content media displayed on the touch screen (510) of the electronic device (300) during the first and second finger touch down events in accordance with the touch swipe event (540).

**10.** An electronic device (300), comprising:
a touch-sensitive touch screen (510);
a processor coupled to the touch screen;
a memory coupled to and in cooperative arrangement with the processor, the processor and the memory configured to:
displaying a first screen of a plurality of screens;
in response to a first finger touch down event the a first screen of the plurality of screens of the content media displayed and navigable on the touch screen (510) of the electronic device (300), create a first temporary finger bookmark (520) corresponding to the first screen of the displayed content media;
displaying a second screen of a plurality of screens; and
in response to a first finger touch release eventcorresponding to the first screen of the content media, flip to and display the first screen of the content media on the touch screen (510) and delete the first temporary finger bookmark (520).

**11.** The device of claim 10, the processor and memory further configured to:
in response to a touch swipe event (540) occurring on any of the plurality of screens of the displayed content media, navigate the plurality of screens of the content media displayed on the touch screen (510) of the electronic device (300) during the first finger touch down event in accordance with the touch swipe event (540).

**12.** The device of claim 10, the processor and memory further configured to:
store a first screen address of the first screen of the displayed content media into a memory of the electronic device; and
optionally,
in response to the first finger touch release event, the processor and memory further configured to: delete the first screen address of the first screen from the memory of the electronic device (300).

**13.** The device of claim 10, the processor and memory further configured to:
in response to a second finger touch down event on a second screen of the plurality of screens of the content media displayed and navigable on the touch screen (510) of the electronic device (300), create a second temporary finger bookmark (530) corresponding to the second screen of the displayed content media; and
in response to a second finger touch release eventcorresponding to the second screen of the content media, flip to and display the second screen of the content media displayed on the touch screen (510) and delete the second temporary finger bookmark (530).

**14.** The device of claim 13 the processor and memory further configured to:
in response to a touch swipe event (540) occurring on any of the plurality of screens of the displayed content media, navigate the plurality of screens of the content media displayed on the touch screen (510) of the electronic device (300) during the first and second finger touch down events in accordance with the touch swipe event (540).

**15.** The device of claim 13 the processor and memory further configured to:
store a second screen address of the second screen of the displayed content media into a memory of the electronic device (300); and
optionally,
the processor and memory further configured to: in response to the second finger touch release event (540), delete the second screen address of the second screen from the memory of the electronic device (300).
